# EUROPEAN PATENT APPLICATION

(11) **EP 1 953 643 A2**
(43) Date of publication of application: **06.08.2008**
(21) Application number: 08001848.4
(22) Date of filing: 31.01.2008
(51) Int. Cl.: G06F 9/52

(54) **Calculation apparatus provided with a plurality of calculating units which access a single memory**

(30) Priority: 01.02.2007 JP 2007022810; 12.06.2007 JP 2007155268
(71) Applicant: Denso Corporation, Kariya-city, Aichi-pref. 448-8661 (JP)
(72) Inventor: Ohi, Masaya c/o Denso Corporation ntellectual Property Dept., Aichi pref. 448-8661, (JP); Yamamoto, Hirotaka Denso Corporation Intellectual Property Dept., Aichi pref., 448-8661 (JP)
(74) Representative: Winter, Brandl, Fürniss, Hübner Röss, Kaiser, Polte Partnerschaft Patent- und Rechtsanwaltskanzlei

(57) **Abstract**

A calculation apparatus comprises a plurality of processing units that processes a plurality of predetermined calculation processes each composed of steps, respectively, and a memory device to which the plurality of processing units are accessible. Specific information that specifies a step that should be executed next among steps of each of the calculation process is memorized in the memory device. In each of the processing units, only when a step specified by the specific information should be executed by that processing unit, the specified step is executed, and the specific information is updated to allow the next step to be executed. This is repeated for all the steps of each calculation process assigned to the plurality of processing units. Each processing unit will not execute steps until the specific information shows that a step specified by the specific information is for the processing unit.

## Description

### CROSS REFERENCES TO RELATED APPLICATION

The present application relates to and incorporates by reference Japanese Patent Application Nos. 2007-022810 filed on Feb. 1, 2007 and 2007-155268 filed on June 12, 2007.

### BACKGROUND OF THE INVENTION

### (Field of the Invention)

The present invention relates to a calculation apparatus comprising a plurality of processing units each of which executes a given calculation process and a memory device which the processing units are able to individually access for executing the program.

### (Description of the Related Art)

Conventional calculation apparatuses include a calculation apparatus equipped with a single processing unit. In this apparatus, the single processing unit is in charge of executing a process (referred to a "calculation process"), which is composed of a series of steps to be performed, i.e., a procedure. The processing unit is able to manage and execute the procedure (calculation process) in a desired manner.

Recently, for speeding up processes to be calculated, some calculation apparatuses are provided with a plurality of processing units so as speed up processes to be calculated. In this apparatus, the processing units execute individually assigned procedures in a mutually coordinated manner.

However, such a calculation apparatus is confronted with a difficulty concerning the transmission of data among the plural processing units. Specifically, when each processing unit needs to execute a given procedure (i.e., "calculation process") when accessing the same memory device. Thus, the plural processing units may write data into the same memory device at the same time, so that the data stored In the memory device may be erroneous. As a result, the erroneous data may be transmitted among the processing units.

To solve this difficulty, there is known a technique proposed by Japanese Patent Application Laid-open Publication No. 5-324577. When using this technique, during access of a central processing unit (CPU) to a memory device (shared memory), the other processing units are made to refrain from accessing the same memory location, thus making it possible to transmit data among the processing units normally.

By the way, when the calculation apparatus adopts only one processing unit, the calculation apparatus is able to execute, in a predetermined order, the respective procedures of a process to be performed. In this case, the processing unit can manage and execute the procedures in a unified manner, so that the execution order of the procedures gives no problem.

In contrast, in cases where a plurality of processing units should execute individually assigned procedures In a coordinated manner, it is difficult to manage, in a unified manner, the procedures executed by the respective processing units. That is, it may be difficult for the respective processing units to execute procedures assigned to those processing units in a given order.

For example, such a difficulty is likely to occur when there are differences among the processing units in their processing capabilities or there are differences among processing loads on the procedures given to the respective processing units. In such cases, before a particular processing unit completes its execution of given procedures, another processing unit may start to execute procedures which should be processed next to the procedures executed by the certain processing unit. If this happens, the procedures assigned to the respective processing units will not be executed in the correct order, yielding improper calculation results.

A detailed example is as follows. It is supposed that a certain processing unit computes the value of a physical quantity, which is then referenced and initialized by another processing unit. In this case, when the order of the two steps is reversed, the latter processing unit will refer to incorrect or improper value and then initialize it, whereby the finally calculated result is erroneous.

### SUMMARY OF THE INVENTION

The present invention, which has been made in consideration of the circumstance described above, has an object of providing a calculation apparatus in which a plurality of processing units are able to coordinate to execute the steps (i.e., procedure) of each of one or more given calculation processes reliably in a predetermined order, without disturbing the processing timing among the processing units.

In order to achieve the above object, as one mode, the present invention provides a calculation apparatus, comprising a plurality of processing units that process a predetermined calculation process composed of steps; and a memory device to which the plurality of processing units are accessible, wherein at least specific information that specifies a step that should be executed next among steps of the calculation process is memorized in the memory device as an initial form of the specific information, the initial form being specific information that specifies a step that should be executed initially, wherein each of the processing units comprises: a reading block that reads out the specific information from the memory device; a first determining block that determines whether or not the step specified by the read-out specific information is a step that should be executed by the processing unit, on the basis of the respective steps of the calculation process processed by the processing unit and a correspondence information showing a correspondence relationship to the processing unit that should process the steps; an executing block that executes the determined step when it is determined that the step specified by the read-out specific information is a step that should be executed; a second determining block that determines whether or not in the calculation process there is left a step which should be executed, on the basis of the specific information read out by the reading block, after the executing block has executed the determined step; a updating block that updates the specific information in the memory device into specific information that specifies a step next to the executed step, in cases where the second determining block determines that in the calculation process there is left a step that should be executed, and means that allows the reading block, the first determining block, the executing block, the second determining block and the updating block to repeat operations thereof until the second determining block determines that in the calculation process there is left no step that should be executed.

As another mode, the present invention provides a calculation apparatus, comprising a plurality of processing units that process a plurality of predetermined calculation processes each composed of steps, respectively, wherein one or more steps in each calculation process are assigned, as assigned steps, to each of the processing units; and a memory device to which the plurality of processing units are accessible; wherein each of the processing units comprises: executing means for executing in sequence the assigned steps assigned to the processing unit; notification storing means for storing into a memory region of the memory device a notification showing that the executing means has executed each step, the memory region being made to correspond to the processing unit; determining means for determining whether or not a premise step (or a required step) has been executed based on the notification stored in the memory device after the executing means has executed the step, the premise step being defined as a step which should be executed before the executing means executes a step next to the executed step; and stopping means for stopping the execution of the next step by the executing means until the determining means determines that the premise step has been executed.

### BRIEF DESCRIPTION OF THE DRAWINGS

In the accompanying drawings:
Fig. 1 is a block diagram showing the configuration of a calculation apparatus according to a first embodiment of the present invention;
Fig. 2 is an illustration explaining the structure of data of correspondence information;
Fig. 3 is a flowchart showing a step execution process to be executed by a particular processing unit among plural processing units;
Fig. 4 is a flowchart showing a step execution process to be executed by another processing unit;
Fig. 5 is an illustration showing how each processing unit executes procedures;
Fig. 6 is a flowchart showing a step execution process according to a modification;
Fig. 7 is a block diagram showing the configuration of a calculation apparatus according to a first embodiment of the present invention;
Fig. 8 is a flowchart showing an assigned-step execution process carried out in a first example of the first embodiment;
Fig. 9 is a flowchart showing essential parts repeated in the assigned-step execution process in the first example of the first embodiment;
Fig. 10 is a flowchart showing a management execution process carried out in a second example of the first embodiment;
Fig. 11 is a flowchart showing an assigned-step execution process carried out in the second example of the first embodiment;
Fig. 12 is a flowchart showing essential parts repeated in the assigned-step execution process in the second example of the first embodiment;
Fig. 13 is a flowchart showing a management execution process carried out in a third example of the first embodiment;
Fig. 14 is a flowchart showing essential parts repeated in the assigned-step execution process in the third example of the first embodiment; and
Fig. 15 is a partial flowchart showing a modification of the first to third embodiments.

### DETAILED DESCRIPTION OF THE PREFERRED EMBODIMENTS

Hereinafter, an embodiment and modifications of the present invention will now be described with reference to the accompanying drawings.

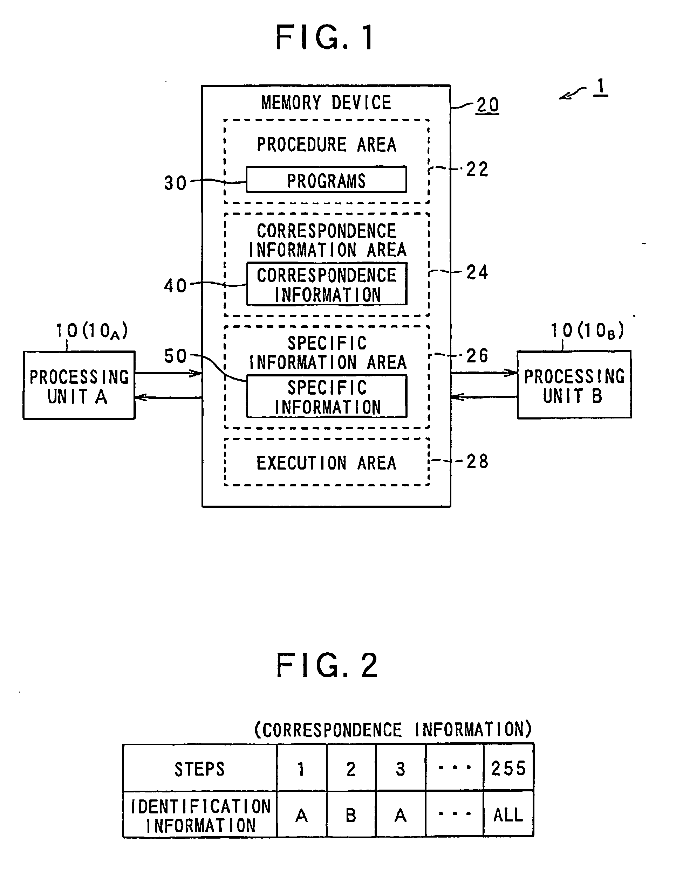

Referring to Figs. 1 - 6, a first embodiment of a processing apparatus according to the present invention will now be described.

Fig. 1 shows a processing apparatus 1 according to the present embodiment. As shown in Fig. 1, the processing apparatus 1 is provided with a plurality of processing units (or processors) 10 (in the present embodiment, two processing units 10_{A} and 10_{B} are adopted), and also a memory device 20 which each of the processing units 10 is able to access. Each processing unit 10 (i.e., 10_{A} or 10_{B}; hereinafter, denoted in this way depending on situations) is able to execute a predetermined calculation process in a coordinated manner. The process may be composed of one or more processes.

Practically, each processing unit 10 performs a step execution process described later and a calculation process in accordance with a program 30 implemented in a procedure area 22 which is part of the memory area of the memory device 20.

The step execution process is a process to sequentially deploy data for every step in a specific calculation process into an execution area 28 on the basis of both correspondence information 40 and specific information 50. The memory area of the memory device 20 includes, in addition to the above execution area 28, an area 24 called "correspondence information area" in which the correspondence information 40 is stored and an area 26 called "specific information area" in which the specific information 50 is stored. In the present embodiment, the deployment process is to partially initialize the memory area.

As shown in Fig. 2, the correspondence information 40 is formed as a data table in which each of steps for the foregoing calculation process and each piece of identification information assigned to a processing unit 10 that is responsible for the execution of the steps (procedure) are registered in a manner that each piece of identification information corresponds to each of the steps. Of the pieces of identification information contained in the correspondence information 40, the identification information that corresponds to the last step in the calculation process is subjected to a correspondence to all the processing units 10. This is shown by indicating "all" in Fig. 2. That is, for executing this calculation process shown in Fig. 2, the last step is executed individually by all the processing units 10.

In addition, the last step in the calculation process is prepared as a step that has no influence of results of this calculation process. This means that even if this last step is obliged to be executed simultaneously or with a temporal difference therebetween or thereamong, no changes are produced in the results of this calculation process.

The specific information 50 stored in the specific information area 26 is able to specify the step to be executed next in the calculation process. The specific information 50 has an initial value of step "1" to be memorized by a specific processing unit 10, and after this initialization, the specific information 50 is updated in sequence by each processing unit 10.

### (Processing executed by processing unit)

The steps of the step execution process to be executed by each processing unit 10 after the activation of the calculation apparatus 1 will now be described.

This step execution process can be classified into a first type of step execution process to be executed by a particular processing unit "10_{A}" among the plural processing units 10 and a second type of processing unit "10_{B}" other than the specific processing unit "10_{A}" in the plural processing units 10. The step execution processes to be executed by the first and second types of processing units "10_{A}" and "10_{B}" are in part different in their processes from each other. Thus, in this description, the former (the first type) is referred to as a "specific step execution process," while the latter is referred to as a "general step execution process," which will now be described separately.

### <Specific step execution process>

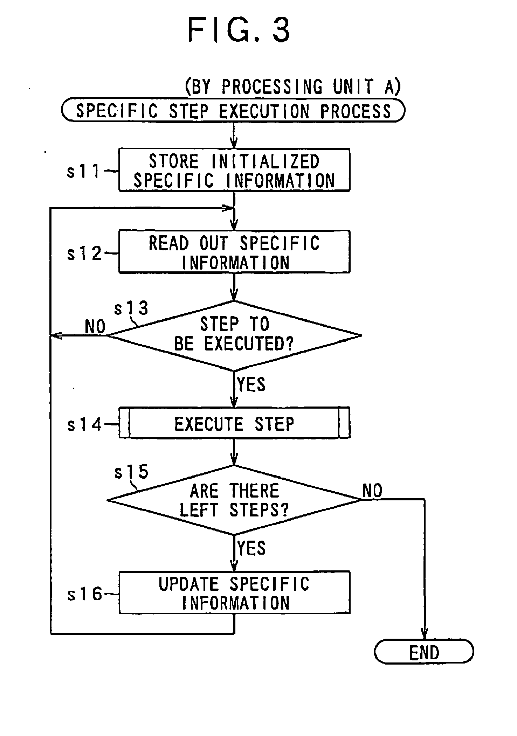

At first, referring to Fig. 3, the specific step execution process to be executed by a particular processing unit 10_{A} will now be described.

When this specific step execution process is activated, the particular processing unit 10_{A} firstly stores the specific information 50 into the specific information area 26 of the memory device 20 (step S11 in Fig. 3). In this embodiment, the specific information 50 which can specify a "step 1" serving as an initial value is produced, and this initial value is stored in the specific information area 26 as the initialized specific information 50.

The particular processing unit 10_{A} reads out the specific information 50 from the specific information area 26 of the memory device 20 (step S12).

Then, the processing is shifted to step S12, where, using the correspondence information 40 stored in the correspondence information area 24, it is determined whether or not the step specified by the specific information 50 at step S12 should be executed by the processing unit 10_{A} itself. Of the pieces of the identification information contained in the correspondence information 40, when a piece of Identification information made to correspond to the steps specified by the specific information 50 is a piece of identification information assigned to the processing unit 10_{A} itself or assigned as "all," the step is determined to be executed by that processing unit 10_{A} itself.

In the case of the example shown in Fig. 2, when the step specified by the specific information 50 at step S12 is "1", "2", or "255," the specified step is considered as a step to be executed by the particular processing unit 10_{A} itself. This is because, as shown in Fig. 2, the identification information is shown as either "A" meaning assignment to the particular processing unit 10_{A} or "all."

When it is determined at step S13 that specified step should not be executed by the particular processing unit 10_{A} itself (NO at step S13), the processing is returned to the step S12.

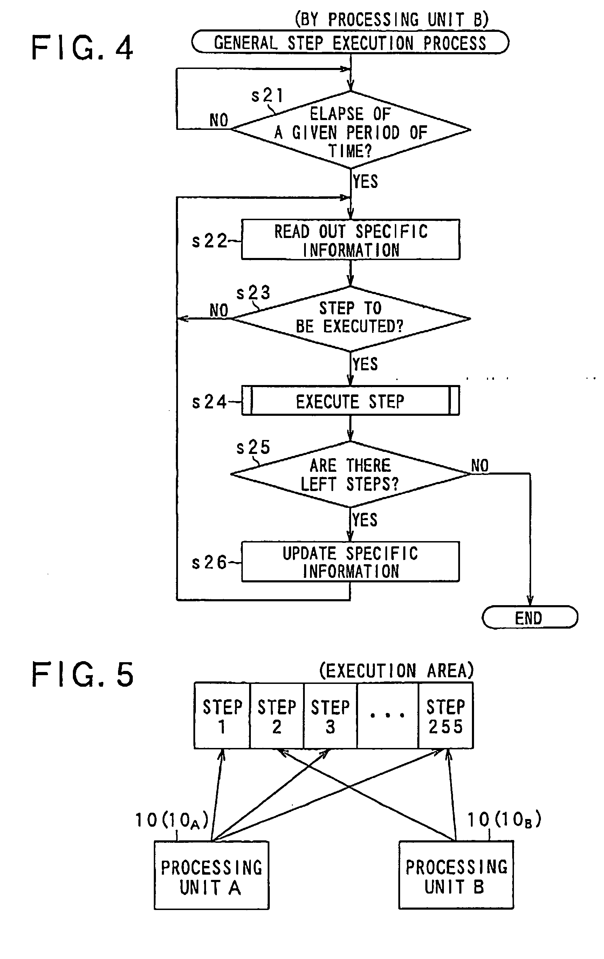

In contrast, the determination at step S13 shows the opposite case (YES at step S13), the processing unit specified at step S12, which is one step of the calculation process, is subjected to the execution at step S14. In the example shown in Fig. 2, the step "1" is specified, and data implemented at a part of the execution area 28, the specified step "1" is thus initialized, as understood from the illustration in Fig. 5.

At the next step S15, it is determined whether or not there are left steps which should be executed by the particular processing unit 10_{A}. In this determination, the correspondence information 40 stored in the correspondence information area 24 is used to determine whether or not the pieces of the correspondence information 40 include the next step to the step specified by the specific information 50 at step S12 (i.e., the step executed at step S14). If the correspondence information 40 Includes the next step, the determination is made such that there are step(s) remaining to be executed after this.

When the determination at step S15 reveals that there are steps remaining to be executed (YES at step S15), the next step S16 is executed, in which the specific information 50 in the specific information area 26 is updated with information that enables the next step, which is determined at step S15, to be specified. Then the processing is returned to step S12.

In the example according to the present embodiment, the correspondence information 40 regulates that the last step of the calculation process should be executed by all the processing units 10. Thus, until the last step is executed by all the processing units 10 including the particular processing unit 10_{A}, i.e., the execution of the calculation process is completed, the steps of S12 to S16 are repeated.

On completion of the execution of the last step, it is determined at step S15 that there is left no step which should be executed (NO at step S15), before the present specific step execution process.

Referring to Fig. 4, the general step execution process carried out by the processing units 10 (in this case, the remaining processing unit 10_{B}), other than the particular processing unit 10_{A}, will now be described. This general step execution process is activated concurrently with the activation of the foregoing specific step execution process.

On activating the general step execution process, the processing unit 10_{B} waits for a given period of time (NO at step S21). Since the specific step execution process is also activated in parallel with this process, this given period of time needs to be longer than a period of time necessary to enable the particular processing unit 10_{A} to store, at least, the specific information 50 into the specific information area 26 of the memory device 20 during the specific step execution process (refer to step S11 in Fig. 3).

If this given period of time has passed (YES at step S21), the processes at steps S220 - S270, which are the same as steps S12 - S17 in the specific step execution process, will be executed in turn. Then this execution process is ended.

In the calculation apparatus 1 according to the present embodiment, each processing unit 10 (10_{A} or 10_{B}) will execute a step only when the specific information 50 specifies the step which should be executed by that specific processing unit 10, as shown in Fig. 3, steps S13 and S14, and Fig. 4, steps S23 and S24). After this, to specify the next step, the specific information 50 is updated (steps S16 and S26 in Figs. 3, 4). This cycle of the determination, execution and update is repeated until all the steps of the calculation processes given to the respective processing units 10 are finished (steps S12 - S16 in Fig. 3 and steps S22 - S26 in Fig. 4).

Thus, each processing unit will not execute instructions until the specific information 50 allows it to (NO at steps S13 and S23). It is therefore possible to the steps are always processed at the right order in each of the processing units. That is, such a situation where the second step, which should be processed after the first step, is forced to be processed prior to the first step, can be avoided reliably.

Additionally, to execute the steps of the calculation process, the order of the steps is regulated by the correspondence information 40. Hence, the processes at the steps can be executed reliably in the right order in the calculation process, whereby the calculation provides correct results.

It is therefore preferred to apply the present calculation apparatus to a plurality of calculation processes which are for example implemented in a control system for vehicles, provided that the calculation processes of the control system rely on each other in a specified variable or other factors. For example, when there are supposed two calculation processes, one calculation process is for receiving an electric signal from a crank angle sensor or a cam angle sensor in a vehicle and setting the signal value to a specified variable and the other is for reading the value which has been set in the specified variable to control the vehicle. In this case, the setting step should be performed before the reading step, i.e., there must be a predetermined sequence between the setting and reading steps of the two calculation processes. Even in such a case, the present calculation apparatus is able to work with reliability.

Further, in each processing unit 10, it is determined whether or not there are left some steps to be executed, every time each step is processed (steps S14, S15 in Fig. 4 and steps S24 and S25 in Fig. 5). When the last step has been processed, it is decided that no step to be processed is left (steps S15 and S25 in Figs. 4 and 5).

Furthermore, immediately after the particular processing unit 10_{A} activates the specific step execution process, the initialized specific information 50 is memorized into the specific information area 26 (step S11 in Fig. 3). Thus it is enough to regulate the correspondence information 40 so that the first step in the calculation process should be executed by the particular processing unit 10 (refer to Fig. 2). This means that it is not needed to previously give the initialized specific information to the memory device 20, but it is possible to sequentially execute the processes at the steps of the calculation process by using, as reference information, the specific information 50 stored by the particular processing unit 10_{A}.

### (Modifications)

There can be provided a variety of modifications of the first embodiment as follows.

The number of processing units which can be employed by the calculation apparatus 1 is not limited to two, but three or more processing units can be employed of course.

Further, in the foregoing step execution process, the determination whether or not some steps to be executed are left in the steps in the calculation process is carried out individually after steps S14 in Fig. 3 and S24 in Fig. 4. But this is not a definitive example. This determination may be performed at any time, provided that the specific information 50 is read out at step S12 or S22.

For example, this determination may be carried out after the step S140 or S240 in the same way as the above, only when the determination at step S13 or S23 shows that there is a step which should be processed by each processing unit 10. However, in the opposite case, i.e, a case where the determination at step S13 or S23 shows that there is not a step which should be processed by each processing unit 10, the process can wait for the affirmative determination.

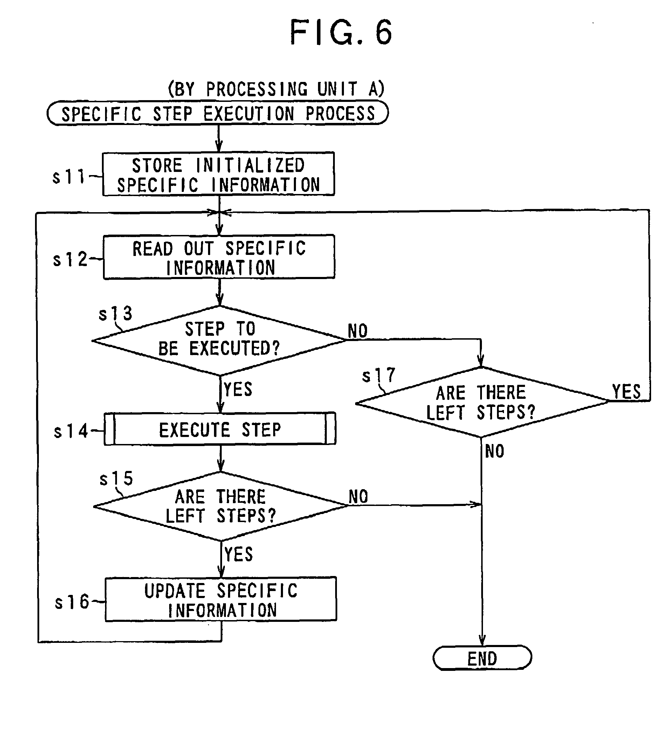

For the above modification, as shown in Fig. 6, if it is determined that a step should not processed by each processing unit 10 (NO at step S13), the processing is then shifted to step S17 to check whether or not there is left a step which should be processed, in the same way as step S15. If there is left such a step (YES at step S17), the processing is made to return to step S12, while in the opposite case (NO at step S17), the specific step execution process is ended.

The above processing may also be applied to the remaining processing unit 10_{B}, not limited to the particular processing unit 10_{A}. If needed, the steps S12 - S17 may be replaced by steps S22 - S27.

This modification makes it possible that each processing unit 10 determines that no step is left (step S15 in Fig. 6), after the last step is executed, in cases where a step specified by the specific information 50 is the last step and should be executed by the that specific processing unit 10. If the specified step should not be executed by that specific processing unit, the determination that no step is left can be made at the time immediately after the determination (NO at step S17 in Fig. 6).

Hence, without making all the processing units 10 execute the last step of the calculation process, the step execution process can be ended in response to finishing the execution of all the steps of the calculation process.

In the foregoing embodiment, the particular processing unit 10_{A} stores the initialized specific information 50 into the specific information area 26 immediately after activation of the specific step execution process (step S11 in Fig. 3). Another mode is that every time the calculation apparatus 1 is activated, the initialized specific information 50 is stored. In this case, the programs may be designed such that, without executing step S11 in Fig. 3 and step S21 in Fig. 4, step S12 and subsequent steps and/or step S22 and subsequent steps are processed.

### (Second embodiment)

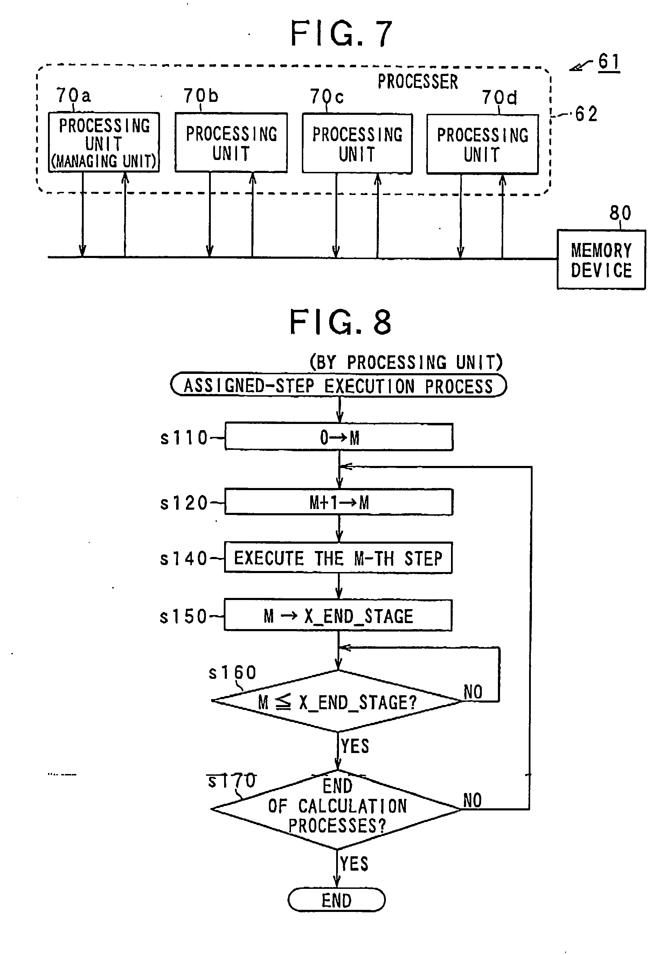

Referring to Figs. 7 - 15, a calculation apparatus according to a second embodiment of the present invention will now be described.

Fig, 7 shows a calculation apparatus 61 according to the second embodiment. The calculation apparatus 61 comprises a single processor 62 having four processing units 70 (70a to 70d) and a single memory device 80 to which the four processing units 70 are accessible. The single processor 62 allows the respective processing units 70 to coordinate for efficiently executing a plurality of given processes (given calculation processes) in a parallel processing manner.

Each of the processing units 70 is configured to execute an assigned-step execution process, which will be detailed later, according to programs stored in the memory device 80. In addition, to each of the processing units 70, one or more steps in each of the foregoing calculation processes (hereinafter referred to as "assigned steps") are assigned. During the assigned-step execution process, data of each set of assigned steps assigned in each calculation process are deployed by turns at every processing unit. In the present embodiment, this data development is explained as partial initialization which performed in the memory region.

Hereinafter, various examples of the calculation processes to be executed by each of the processing units 70 will now described.

### (First example)

First of all, referring to Fig. 8, the procedure of an assigned-step execution process, which is executed by each processing unit 70 after starting the processor 62, will be described.

When the assigned-step execution process is activated, a variable M prepared in the memory device 80 is initialized by setting the variable M to 0 (zero) (step S110). Then the variable M is incremented (M=M+1) (step S180).

Next, of the one or more steps of the set of steps assigned to a particular processing unit 70, a step having the same order as the variable M (i.e., the M-th procedure) is specified, and the specified step is executed (step S140). This makes it possible to initialize data at addresses in the memory region of the memory device 80, which addresses correspond to the executed step. If the particular processing unit 70 has no assigned step the order of which is the same as the variable M, any processing will not be executed at this step S140.

The value of the variable M at this time, that is, the value showing the order of the step executed at step S140, is copied into a variable X_END_STAGE prepared in the memory device 80 (X_END_STAGE=M) (step S150). This variable X_END_STAGE is for the particular unit 70 and X shows a value inherent to each of the processing units 70a to 70d. This variable X_END_STAGE notifies other processing units 70 (i.e., processing units other than the particular processing unit) of the fact that the step indicated by the value of the order which was set has been executed.

Then, the value which was set in the variable X_END_STAGE in the memory device 80 is used to check whether or not a premise step (i.e., a required step) has already been executed (step S160). This premise step (required step) is defined as a step that should be executed before the particular processing unit 70 will execute at an "M+1"-th step.

In the present embodiment, as a step that should be executed prior to the execution of a j-th (j=2,3, ...) step, to each of the assigned steps of the respective processing units 70, a "j-1"-th step is set in the assigned steps to each of all the processing units 70. As described, the foregoing variable X_END_STAGE is set to the current value of the order executed at step S140 by each processing unit 70. Thus, at step S160, it is determined whether or not the premise step (required step) at the "M+1"-th step has been executed, on the basis of the condition that the value set in each variable X_END_STAGE is equal to or larger than the current value of the variable M (i.e., M≤ X_END_STAGE). That is, when this condition is met, it is determined that the premise step at the "M+1"-th step has already been executed.

Until the determination at step S160 reveals that the premise step has been executed, i.e., all the processing units 70 complete the M-th step, each processing is kept in a waiting state (No at step S160).

When it is determined at step S160 that the premise step at the "M+1"-th step has already been executed (Yes at step S160), it is then determined whether or not the calculation process has been finished (step S170). In the present embodiment, of the assigned step to the respective processing units 70, an assigned step showing the largest number of steps thereof is specified and the largest step number is used as a determination value. Thus when the current value of the variable M is equal to or greater than the determination value, it is determined that the calculation process has been finished.

By the way, how to set the determination value is not always limited to the above manner, in which the largest number of steps of one of the assigned steps is set as a determination value. Alternatively, a predetermined value may be set as the determination value, which still can give criteria to determining the end of the calculation process.

When the determination at step S170 shows that all the steps for the calculation process are unfinished (NO at step S170), the processing returns to step S180. The steps from S180 to S170 will be repeated until all the steps for the calculation process are executed.

Meanwhile when the determination at step S170 shows the completion of all the steps for the calculation process (YES at step S170), the processing of this assigned-step execution process ends.

As described, in the calculation apparatus 61 of the present example, every time each processing unit 70 executes each of one or more steps among the assigned steps to the respective calculation processes (at step S140 in Fig. 8), the order in which each procedure is executed is set in the variable X_END_STAGE in the memory device 80 (at step S150 in Fig. 8). This setting is able to inform the other processing units 70 that the procedure has been executed.

In addition, in cases where each of the processing units 70 determines, from the variable X_END STAGE, that the premise step for a step next to the executed step has been performed (YES at step S160), the next step will be executed (steps S170 to S180 to S140).

In this configuration, as long as the premise step for the step next to the step which has been executed is already executed, the next step starts to be executed immediately. However, if such premise step has not been executed yet, the processing waits for the completion of execution of this premise step (NO at step S160). On completion of execution of this premise step, the next step is executed.

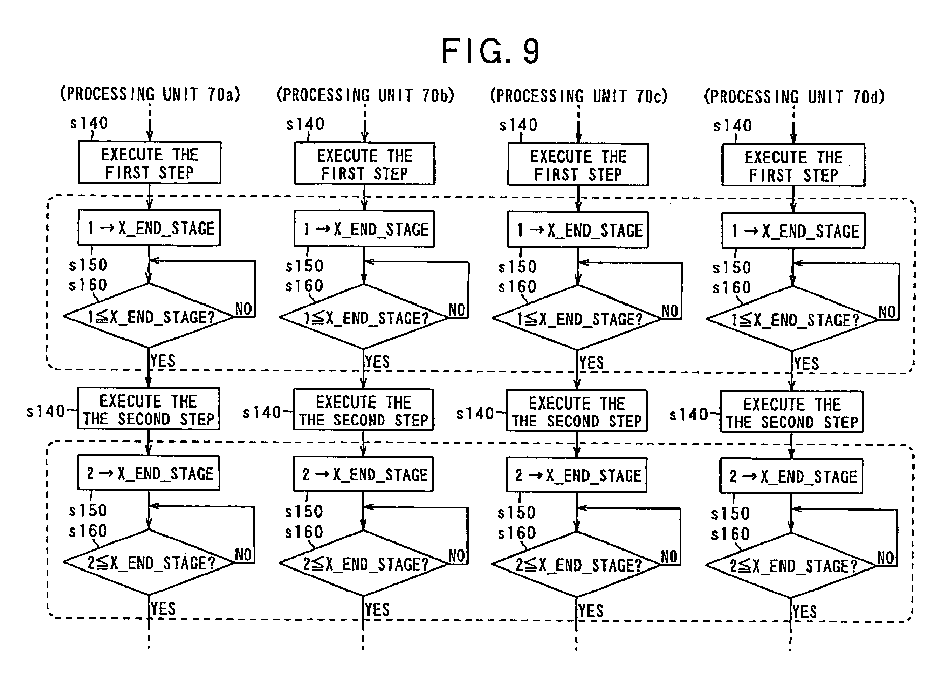

In this way, irrespective of differences or equality in the processing capabilities of the processing units 70 and/or differences or equality in the processing loads given from respective steps, each of the assigned steps is carried out by each processing unit 70a (to 70d) as shown in Fig. 9. As can be understood, unless the premise step (required step) for each assigned procedure has been executed (refer to the steps S150 and S160 surrounded by dotted lines), each assigned step will not be executed. That is, it can be said that each assigned step is locked or synchronized by the steps S150 and S160. Fig. 9 shows only essential parts to be repeated by each processing unit 70a (to 70d) in the assigned-step execution process.

As described in the present embodiment, in a case where a calculation process needs a former particular step to be executed on the premise (or as a requirement) of the execution of a later step which is a particular step in executing the calculation process, the former step can be defined as the premise step (or requires step) for the later step. Hence, the later step (particular step), which premises (requires) the execution of the first step, can be prevented from being executed before the former step. That is, the former step acts as a lock to the later step.

In this way, the steps of the assigned procedure to each processing unit 70 can be executed under the condition that the premise step (required step) for the step has been executed. Thus, by properly setting the premise step for each assigned step, it is possible to avoid the steps of each calculation process from being executed at unwanted timing, that is, at erroneous timing. Accordingly, the calculation processes can be avoided from producing erroneous results.

In addition, in the foregoing embodiment, each processing unit 70 is able to make reference to each variable X_END_STAGE memorized in the memory device 80 in order to directly determine whether or not steps following the premise step are already executed. And whenever the determination shows the execution of the steps following the premise step (YES at step S160), the following steps can be executed (refer to the flow of steps S170 to S180 to S140).

If it is also determined that the value set in each variable X_END_STAGE is equal to or larger than the current value of the variable M, the steps following the premise step (requires step) are subjected to execution. When this determination is made, it is recognized that the premise step has been executed. Therefore, in the case where the value indicating the order of the premise step itself is set (M=X_END_STAGE) as well as in another case where a value indicating a step after the premise step is set (M<X_END_STAGE), it is possible to determine that the premise step has been executed.

The above latter case may occur due to some reasons, which include a situation where any processing unit 70 itself has been reset due to some cause. If this resetting happens, the assigned steps are obliged to re-execute from the beginning. In this case, there is a high possibility that the premise step (which is to be executed in this re-execution) for each assigned step was executed by other processing units 70 in the past, provided that the other processing units 70 are in normal operation.

In this regard, there is no problem if the variable X_END_STAGE keeps as its value a value indicating the order of a step executed in the past. However, the value given to this variable is updated in succession (step S150 in Fig. 8). Thus, even if the premise step is executed in the past, the variable X_END_STAGE will have no value showing the order of the premise step.

Hence, in cases where it is determined that the premise step has been executed based on only the condition that the variable X_END_STAGE has the value showing the order of the premise step itself, the processing units 70 cannot execute he reset step or subsequent steps therefrom. This is because the value indicating that the premise step has been executed is not set to the variable X_END_STAGE, even though the required step was executed in the past.

In this regard, in the present example, even in the case where the value indicating a step following the required step is set to the variable X_END_STAGE, it is possible to decide that the required step has been finished. Hence it is avoidable that the processing units 70 cannot execute the steps that follow the reset step.

Therefore, in cases where after the plural processing units 70 finish their calculation processes, i.e., series of steps, respectively, and any processing unit is reset, only the assigned step(s) to the reset processing unit are subjected to re-execution. As a result, the relevant steps in each calculation process can be processed without any difficulties resulting from the reset action.

### (Second example)

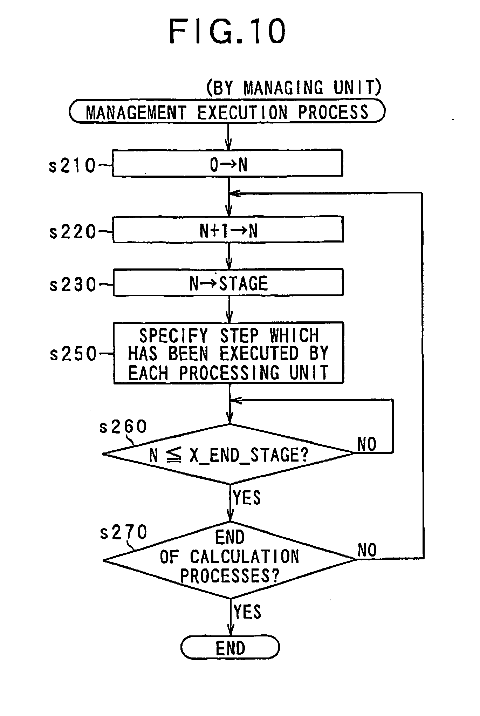

Referring to Figs. 10 - 12, a second embodiment will now be described.

The second example is different from the first example in that a step is not assigned to the calculation process processed by any processing unit (in this example, the processing unit 70a In Fig. 7) of the plural processing unit 70; this step-not-assigned processing unit 70a acts as a management unit for the remaining processing units 70b to 70d to manage the processing thereof; and the managing unit 70a executes a later-described management execution process in accordance with a program stored in the memory device 80.

### <Management execution process>

Referring to Fig. 10, the management execution process which is started up by the managing unit 70a in response to activation of the processor 62.

When the management execution process is activated, a variable N prepared in the memory device 80 is initialized by setting the variable N to 0 (zero) (step S210). This variable N is then incremented by 1, to N+1 (step S280).

The value of the variable N is then set to a variable STAGE prepared in the memory device 80 (STAGE=N; step S230). This variable STAGE is set to a value indicative of the order of the steps which are permitted to be executed by the respective processing units 70b, 70c and 70d. As will be described later, of one or more steps of the assigned steps, each of the respective processing units 70b, 70c and 70d is to execute the step of which order is the same as the value which is shown by the variable STAGE.

It is then determined, using the values from variable X_END_STAGE in the memory device 80, which step (of the assigned steps for each processing unit) that the respective processing units 70b, 70c and 70d have finished (step S250).

In the present example, as will be described later, processing units 70b, 70c and 70d execute the step indicated by the value of the variable N at step S230 because the execution thereof is allowed, and then the value showing the order is set to the variable X_END_STAGE. Thus it can be decided at step S250 that each of the processing units 70b, 70c and 70d has execution at a step specified by the order indicated by the value of the variable X_END_STAGE for each processing unit.

It is then checked whether or not the premise step has been executed, using the value of X_END_STAGE for each processing unit (step S260). Like the first example, this premise step (or required step) is defined as a step which should be executed prior to the execution of the step (the "N+1"-th procedure) next to the step determined at step S250.

In this example, like the first example, as the step which should be executed prior to the execution at the j-th step in the assigned steps assigned to each of the processing units 70b, 70c and 70d, set is the step at the "j-1"-th step in the assigned steps to each processing unit. In addition, each variable X_END_STAGE for each processing unit has a value showing the order of a step currently executed by each processing unit. Hence, when the order of the process specified at step S250, that is, the current value of each variable X_END_STAGE is equal to or more than the current value of the variable N (N≤ X_END_STAGE), it is possible to decide that at step S260, the premise step for the "N+1"-th step has been executed.

Like the first example, as a procedure that should be executed prior to the execution of a j-th step, a "j-1"-th step is defined for each of the assigned procedures to the processing units 70b, 70c and 70d. As described, each of the foregoing variables X_END_STAGE is set to the current value of the order executed by each processing unit 70. Thus, at step S260, it is determined whether or not the premise step at the "N+1"-th procedure has been executed, on the basis of the condition that the order of the step determined at step S250, that is, the value of each variable X_END_STAGE, is equal to or larger than the current value of the variable N (i.e., N≤X_END_STAGE). That is, when this condition is met, it is determined that the premise step at the "N+1"-th procedure has already been executed.

Until the determination at step S260 shows that the premise step to the "N+1"-th procedure has been finished, that is, all the processing units 70b, 70c and 70d finishes the N-th procedure, the processing is kept in the waiting state (NO at step S260).

When it is determined at step S260 that the premise step to the "N+1"-th step has been executed (YES at tepS260), it is then checked whether or not all the steps of the calculation processes has been finished (step S270). In this example, like the first example, a determination value is decided to be a value which is the largest among the assigned step numbers to the processing units 70b, 70c and 70d. In cases where the current value of the variable N becomes equal to or larger than the determination value, it is concluded that all the steps for the calculation processes are ended.

Like the first example, the determination value may be a predetermined value, instead of employing the largest assigned step number.

When the determination at step S270 shows that not all the steps for the calculation processes are finished yet (NO at step S270), the processing returns to step S280. Also the steps S280 to S270 are repeated until completion of all the steps for the calculation processes.

Meanwhile, if the determination at step S270 shows that the execution of all the steps for the calculation processes have been finished (YES at step 270), the management execution process is ended.

### <Assigned-step execution process>

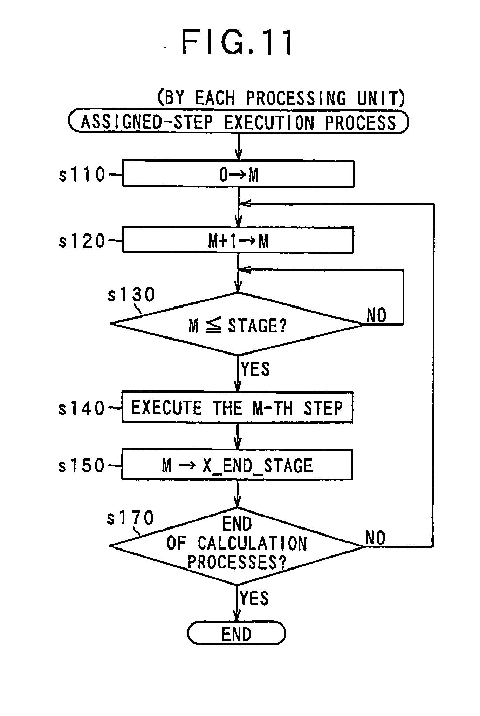

Referring to Fig. 11, the assigned-step execution process performed by the processing units 70b, 70c and 70d.

When the assigned-step execution process is activated by the processing units 70b, 70c and 70d, the processing is carried out in sequence at the steps S170and S180, like the first example. It is then checked whether or not the step which is the same order (the M-th order) as the current value of the variable M is allowed to be executed, on the basis of the value which is set to the variable STAGE in the memory device 80 (step S130).

Practically, the determination is made as to whether or not the value which is set in the variable STAGE is equal to or larger than the current value of the variable M (M≤STAGE). If this condition M≤STAGE is met, it is recognized that the M-th step is allowed to be executed. The variable STAGE is set to a value (the variable N) showing the step (i.e., the M-th step) which should be executed, only when the premise step for the step is already executed, as described before. Hence it is understood that the step S130 realizes the indirect check as to whether or not the premise step is already executed.

Until the determination at step S130 shows the allowance of execution of the M-th step, that is, all the processing units 70b, 70c and 70d complete the execution of the M-th step, the next step will not be executed (in a wait state) (NO at step S130).

When the determination at step S130 is YES, that is, it is determined that the execution of the M-th step is allowed, the processing is shifted to step S140 where this M-th step is actually executed. Then, at step S150, value of the variable X_END_STAGE is set to the value of variable M, before the processing is shifted to step S170.

If it is determined at step S170 that not all the steps for the calculation processes have been finished yet (NO at step S170), the processing is returned to step S180 to repeat the steps S180 to S170 until completion of all the steps for the calculation processes.

In contrast, when the determination is YES at step S170, i.e., all the steps for the calculation process carried out by the processing units 70b, 70c and 70d have been finished, the assigned-step execution process is ended.

In the present second example, in addition to the various operations and advantages gained in the foregoing first example, the following ones can be gained as well.

At first, the managing unit 70a sequentially sets the variable STAGE to values allowing the execution of the respective one or more steps among the assigned steps to each processing unit (step s230 in Fig. 10). In response to this setting operation, each of the processing units 70b, 70c and 70d uses the value which is set in the variable STAGE to execute the respective steps allowed by turns by the variable STAGE (steps S130 and S140 in Fig. 11).

Set to this variable STAGE is a value showing each of the one or more steps in each calculation process (steps S280 and S230 in Fig. 10). This value is set in turn based on the variable X_END_STAGE (step S230), every time it is determined that the premise step has been executed (Fig. 10, steps S260 to S270 to S280).

This means that each of the processing units 70b, 70c and 70d uses the variable STAGE, which is set by the managing unit 70a using the respective variables X_END_STAGE, so as to indirectly determine whether or not the premise step or subsequent steps have been executed. Thus whenever the determination is turned out to have been executed (YES at step S130 in Fig. 11), the next step is executed (step S140 in Fig. 11).

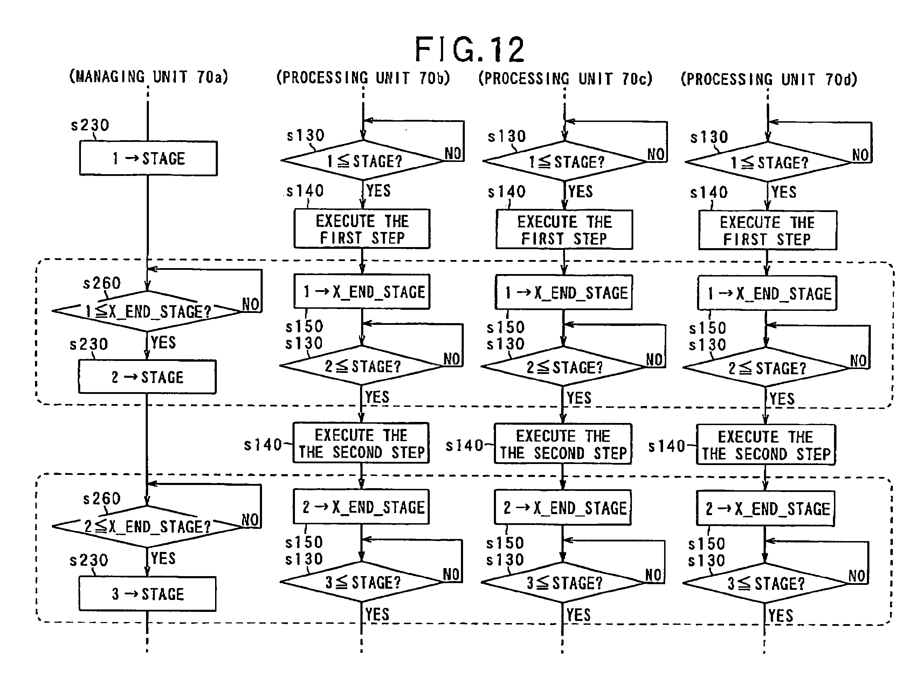

The steps in the assigned steps for each processing unit 70b (70c and 70d) can be processed as illustrated in Fig. 12, which shows only essential parts of the management execution process and the assigned-step execution process. As shown, unless the premise step preceding each of the assigned steps is executed (refer to steps surrounded by dotted lines), the next assigned step cannot be executed, i.e., is locked.

Further, in the configuration of this second example, the determination whether or not the premise step has been executed is carried out collectively by the managing unit. Hence it is enough for the respective processing units 70a, 70b and 70c to execute the corresponding steps to the values which are set in the variable STAGE depending on the determination results in the managing unit 70a. This variable STAGE is independent on the executed conditions of the steps in the processing units 70b, 70c and 70d, and simply shows that the execution of a specified step is allowed.

In other words, it is not needed for one processing unit 70b (70c or 70d) to determine which step is now carried out by the remaining processing units 70c and 70d (70d and 70b, or, 70b and 70c). Without such determination, each processing unit can execute each of one or more assigned steps thereto in a predetermined desired order. This means that each processing unit 70b can be configured independently, irrespective of the other processing units 70c and 70d.

Therefore, when it is required to change the number of processing units in the calculation apparatus 61, it is not necessary to change the configuration of each processing unit. It is enough to change only the configuration (specifically, the contents of the management execution process) of the managing unit depending on the number of processing units. Accordingly, work for changing the number of processing units can be significantly reduced. This feature becomes noticeable with an increase in the number of processing units.

In addition, the managing unit is able to directly determine the completion of execution of the premise step by making reference to the variable X_END_STAGE itself (steps S250 and S260 in Fig. 10).

### (Third example)

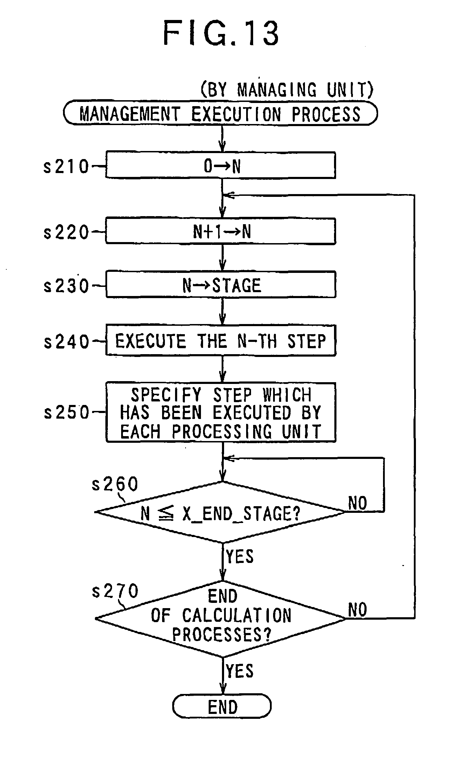

Referring to Figs. 13 to 14, a third example will now be described.

The third example differs from the second example in that one or more steps for a calculation process is assigned to the managing unit 70a and part of the management execution process carried out by the managing unit is changed.

### <Management execution process>

Referring to Fig. 13, how the management execution process is carried out by the managing unit 70a will now be described.

On completion of activation of the management execution process, in the same way as the second example, steps S210 to S230 in Fig. 13 are carried out sequentially. Then, of one or more steps among the assigned steps for the managing unit 70a, the step the order of which is the same (the N-th) as the value of the variable N is specified, and the step thus specified is executed (step S240 in Fig. 13). Hence, a memory part at an address corresponding to the executed step in the memory region of the memory device 80 is initialized. Incidentally, when no step the order of which is the same as the variable N is assigned to each processing unit 70b (70c, 70d), no processing is carried out at step S240.

Like the second example, the processing is then carried out at step S250, and it is checked at step S260 whether or not the premise step for the "N+1."-th step has been executed, on the basis of the current value of each of the variables X_END_STAGE and the step executed at step S240.

Specifically, when all the variables X_END_STAGE have values which are equal to or higher than the current value of the variable N (N≤ X_END_STAGE) and the number of the step executed at step S240 is equal to or higher than the value of the variable N, it is determined that the premise step for the "N+1"-th step has been executed.

Until the determination at step S260 shows that the premise step for the "N+1"-th step has been finished, i.e., all the processing units 70b, 70c and 70d complete the execution of the N-th step, the step S260 is repeated as a waiting step (NO at step S260).

When the determination at step S260 finally reveals that the premise step for the "N+1"-th step has been finished (YES at step S260), the processing is shifted to step S270, which is the same as that in the second example.

Therefore, the calculation apparatus 61 according to the third example is able to provide the operations and advantages gained in the first example, and also provide the following ones.

In this example, the managing unit 70a acts as a processing unit that executes one or more steps of the calculation processes given to the processing units 70b to 70d, not limited to the manager to manage the processing-dedicated units 70b, 70c and 70d. Hence the processing capability of the managing unit 70a can be utilized for multiple purposes. It is also possible to make the processing of the entire apparatus 1 speed up, if the processing capability of the managing unit 70a is larger.

In this example, the managing unit 70a is able to make reference to both the variables X_END_STAGE themselves and the step executed by itself, and directly determine as to the completion of execution of the premise step for each assigned step (step S260 in Fig. 13).

Further, each of the processing units 70b, 70c and 70d uses the variable X_END_STAGE and the variable STAGE the value of which is set based on the step previously executed by the managing unit 70a, and indirectly determines whether or not the premise step or subsequent steps are executed. Whenever this determination shows the completion of execution of such steps (YES at step S130 in Fig. 11 and YES at step S260 in Fig. 13), a step following the completed steps can be executed (step S140 in Fig. 11 and step S240 in Fig. 13).

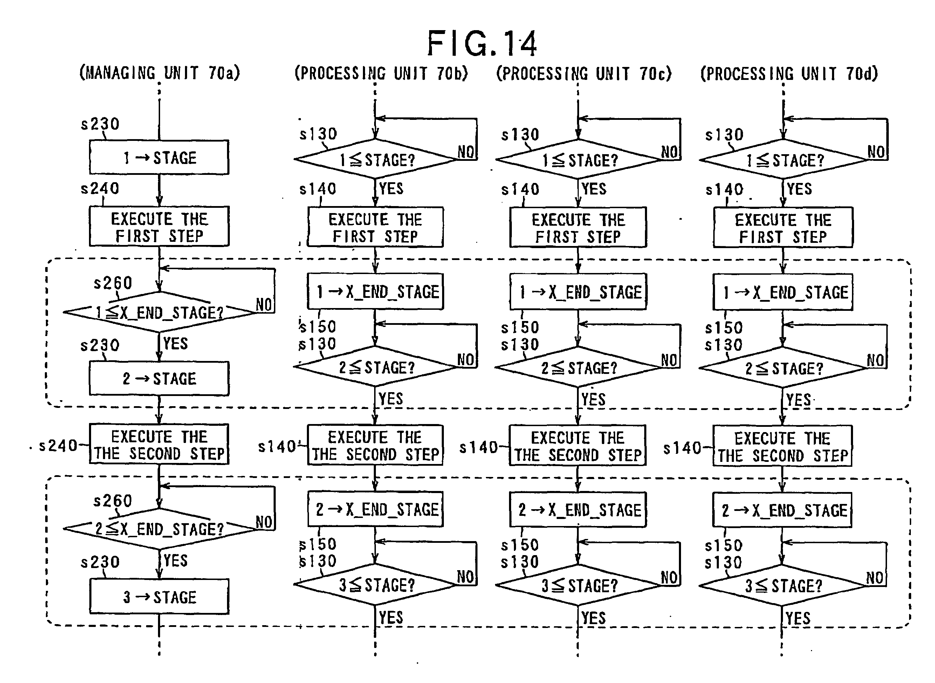

Fig. 14 outlines the operations of the management execution process and the assigned-step execution process. As shown, each step of the assigned steps to each of the processing unit 70a, 70b, 70c and 70d should not be executed, as long as the premise step to each assigned step has not been executed, as shown by the steps surrounded by the dotted lines.

### (Modifications)

The foregoing examples of the second embodiment can be developed into a variety of modifications.

For example, how to mount the processing units 70 in the processor 62 can be modified. Instead of mounting the plural processing units 70 into the single processor 62, like the foregoing, the plural processing units 70 may be different processors one by one or in other proper combinations.

Further, in the foregoing examples, in each of a plural sets of assigned steps respectively assigned to the plural processing units, the "j-1"-th step is specified as a premise step to the j-th step. This premise step may be composed of one or more steps which aligns at particular one or more orders in each of a plural sets of assigned steps to the plural processing units.

In the first example, in place of the processing at step S150 in which a value showing that the assigned step has been executed is set to the variable X_END_STAGE to allow each processing unit to notify the other processing units of the fact. Another such a notification technique is to store information providing this notification into memory areas assigned to every processing unit.

In the second and third examples, the managing unit 70a sets, in the variable STAGE, the order of steps which should be allowed to be executed in each of the processing units 70b to 70d (step S230 in Fig. 10) to allow each processing unit to execute the steps. But this is one example. To allow the execution of the step, a practical order of steps which should be allowed to be executed may be memorized in a memory region of the managing unit 70a. This memorization technique makes it possible that, not limited to the steps the order of which is the same, as in the second and third examples, it is possible to make each processing unit 70b (to 70d) execute the steps on the premise step (or required step) which is stored in the managing unit 70a.

In the foregoing first to third examples, each of the processing units 70a to 70d (including the managing unit 70a in some examples) continues counting the order of the variables M and N until all the assigned steps which should be executed finally in the respective set of assigned steps to the respective processing units have been executed (steps S180 and S280).

An alternative technique to this is to terminate the counting at the time when each processing unit 70a (to 70d) has completed the execution of the last step in each set of the assigned steps assigned to this processing unit. This lessens calculation load for each processing unit.

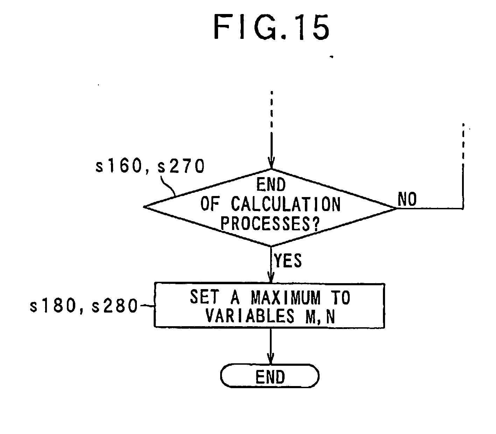

For performing such a load-lessening method, as shown in Fig. 15, at steps S170 or S270 in Figs. 8, 10, 11 and 13, it is determined whether or not the step for the final assigned step assigned to each processing unit 70a (to 70d) has completed its execution. When the final assigned step is not executed yet, the processing is returned to step S180 or S280, while when the final assigned step has been finished, a predetermined maximum value(s) is set to the variable(s) M and/or N (steps S180 and S280 in Fig. 15). The predetermined maximum values are appropriate values larger than the number of steps composing possible assigned steps.

The present invention may be embodied in several other forms without departing from the spirit thereof. The embodiments and modifications described so far are therefore intended to be only illustrative and not restrictive, since the scope of the invention is defined by the appended claims rather than by the description preceding them. All changes that fall within the metes and bounds of the claims, or equivalents of such metes and bounds, are therefore intended to be embraced by the claims.

## Claims

1. A calculation apparatus, comprising
a plurality of processing units that process a predetermined calculation process composed of steps, respectively; and
a memory device to which the plurality of processing units are accessible, wherein at least specific information that specifies a step that should be executed next among steps of the calculation process is memorized in the memory device as an initial form of the specific information, the initial form being specific information that specifies a step that should be executed initially,
wherein each of the processing units comprises:
a reading block that reads out the specific information from the memory device;
a first determining block that determines whether or not the step specified by the read-out specific information is a step that should be executed by the processing unit, on the basis of the respective steps of the calculation process processed by the processing unit and a correspondence information showing a correspondence relationship to the processing unit that should the steps;
an executing block that executes the determined step when it is determined that the step specified by the read-out specific information is a step that should be executed;
a second determining block that determines whether or not in the calculation process there is left a step which should be executed, on the basis of the specific information read out by the reading block, after the executing block has executed the determined step;
a updating block that updates the specific information in the memory device into specific information that specifies a step next to the executed step, in cases where the second determining block determines that in the calculation process there is left a step that should be executed, and
means that allowing the reading block, the first determining block, the executing block, the second determining block and the updating block to repeat operations thereof until the second determining block determines that in the calculation process there is left no step that should be executed.

2. The calculation apparatus of claim 1, wherein the second determining unit is adapted to
determine that in the calculation process there is left no step which should be executed, by confirming that the step specified by the read-out specific information prior to the execution of the determined step is a last step in the calculation process after the executing block has executed the determined step, in cases where the first determining block that determines that the specified step is a step that should be executed, and
determine that in the calculation process there is left no step which should be executed, by confirming that the step specified by the read-out specific information prior to the determination of the first determining block is a last step in the calculation process, in cases where the first determining block that determines that the specified step is not a step that should be executed.

3. The calculation apparatus of claim 1, wherein
the correspondence information is information to which all the processing units correspond which should execute the last step of the calculation process; and
the second determining block is adapted to determine that in the calculation process there is left no step which should executed, in cases where the executed step is the last step in the calculation process.

4. The calculation apparatus of claim 1, wherein
the correspondence information is composed of data to which a particular processing unit among the plural processing units is made to correspond as the processing unit which should execute a first step in the calculation process; and
the particular processing unit comprises an initial memorizing block that allows the memory device to memorize specific information that specifies, as an initial value, a step that should be executed initially.

5. A processing unit incorporated in a calculation apparatus as one of a plurality of processing units that process a predetermined calculation process composed of steps, respectively, the calculation apparatus comprising a memory device to which the plurality of processing units are accessible, wherein at least specific information that specifies a step that should be executed next among steps of the calculation process is memorized as an initial form of the specific information, the Initial form is specific information that specifies a step that should be executed initially,
wherein the processing unit which is the one of the processing units, comprising:
a reading block that reads out the specific information from the memory device;
a first determining block that determines whether or not the step specified by the read-out specific information is a step that should be executed by the processing unit, on the basis of the respective steps of the calculation process processed by the processing unit and a correspondence information showing a correspondence relationship to the processing unit that should the steps;
an executing block that executes the determined step when it is determined that the step specified by the read-out specific information is a step that should be executed;
a second determining block that determines whether or not in the calculation process there is left a step which should be executed, on the basis of the specific information read out by the reading block, after the executing block has executed the determined step;
a updating block that updates the specific information in the memory device into specific information that specifies a step next to the executed step, in cases where the second determining block determines that in the calculation process there is left a step that should be executed, and
means that allows the reading block, the first determining block, the executing block, the second determining block and the updating block to repeat operations thereof until the second determining block determines that in the calculation process there is left no step that should be executed.

6. A program which is stored in a memory and readable by a computer provided in each of a plurality of processing units of a calculation apparatus so as to be implemented into the computer,
wherein the plurality of processing units that process a predetermined calculation process are composed of steps, respectively; and
the calculation apparatus comprises a memory device to which the plurality of processing units are accessible, wherein at least specific information that specifies a step that should be executed next among steps of the calculation process is memorized as an initial form of the specific information, the initial form is specific information that specifies a step that should be executed initially,
wherein the implemented program activates the computer so as to enable each of the processing units to realize functions of:
a reading block that reads out the specific information from the memory device;
a first determining block that determines whether or not the step specified by the read-out specific information is a step that should be executed by the processing unit, on the basis of the respective steps of the calculation process processed by the processing unit and a correspondence information showing a correspondence relationship to the processing unit that should the steps;
an executing block that executes the determined step when it is determined that the step specified by the read-out specific information is a step that should be executed;
a second determining block that determines whether or not in the calculation process there is left a step which should be executed, on the basis of the specific information read out by the reading block, after the executing block has executed the determined step;
a updating block that updates the specific information in the memory device into specific information that specifies a step next to the executed step, in cases where the second determining block determines that in the calculation process there is left a step that should be executed, and
means that allows the reading block, the first determining block, the executing block, the second determining block and the updating block to repeat operations thereof until the second determining block determines that in the calculation process there is left no step that should be executed.

7. A calculation apparatus, comprising
a plurality of processing units that processes a plurality of predetermined calculation processes each composed of steps, respectively, wherein one or more steps in each calculation process are assigned, as assigned steps, to each of the processing units; and
a memory device to which the plurality of processing units are accessible;
wherein each of the processing units comprises:
executing means for executing in sequence the assigned steps assigned to the processing unit;
notification storing means for storing into a memory region of the memory device a notification showing that the executing means has executed each step, the memory region being made to correspond to the processing unit;
determining means for determining whether or not a premise step has been executed based on the notification stored in the memory device after the executing means has executed the step, the premise step being defined as a step which should be executed before the executing means executes a step next to the executed step; and
stopping means for stopping the execution of the next step by the executing means until the determining means determines that the premise step has been executed.

8. The calculation apparatus of claim 7, wherein the determining means is adapted to determine that the premise step has been executed when the notification stored in the memory device shows that the premise step or a subsequent step to the premise step has been executed.

9. The calculation apparatus of claim 7, comprising a managing unit that manages execution of the steps at each of the processing units,
wherein the managing unit comprises
allowance storing means for storing, into a further memory region of the memory device, in sequence, information showing that the execution of each of the steps of each calculation process is allowed, the further memory region corresponding to the managing unit;
first execution determining means for determining whether or not the premise step premised to a step next to the step based on the information stored by the allowance storing means has been executed on the basis of the notification in the memory device; and
means for making the allowance storing means store information showing the execution of a step next to the execution-allowed step, in cases where the first execution determining means determines that the premise step has been executed, after the storage of the information showing the allowance,
wherein the determining means of each of the processing units is adapted to determine the premise step has been executed by recognizing that the information showing the allowance of the execution of a step after the step executed by the executing means is stored in the memory device.

10. The calculation apparatus of claim 9, wherein the first execution determining means is adapted to determine the premise has been executed in a case where the notification stored in the memory device shows that the premise step or a step subsequent to the premise step has been executed.

11. The calculation apparatus of claim 10, wherein the managing unit comprises
step executing means for executing in sequence one or more steps of the calculation processes;
second execution determining means for determining whether or not a premise step has been executed, on the basis of at least the notification stored in the memory device, the premise step being a step among the assigned steps assigned to the processing units and being defined as a step which should be executed prior to the execution of a next step at the step executing means, after the step executing means has executed the step;
stopping means for stopping the execution of the next step by the step executing means until the second execution determining means determines that the premise step has been executed; and
means for making the allowance storing means store information showing the execution of a step next to the execution-allowed step, in cases where the first execution determining means determines that the premise step has been executed and the second execution determining means determines that the premise step has been executed, after the storage of the information showing the allowance.

12. The calculation apparatus of claim 11, wherein
the second execution determining means is adapted to determine that the premise step has been executed, when i) the notification stored in the memory device shows that the premise step to a step after the step executed by the step executing means or a step subsequent to the premise step has been executed or ii) the premise step has been executed by the step executing means.

13. A processing unit incorporated in a calculation apparatus as one of a plurality of processing units that processes a plurality of predetermined calculation processes each composed of steps, respectively, the calculation apparatus comprising a memory device to which the plurality of processing units are accessible, wherein one or more steps in each calculation process are assigned, as assigned steps, to each of the processing units
wherein the processing unit which is the one of the processing units, and the processing unit comprises:
executing means for executing in sequence the assigned steps assigned to the processing unit;
notification storing means for storing into a memory region of the memory device a notification showing that the executing means has executed each step, the memory region being made to correspond to the processing unit;
determining means for determining whether or not a premise step has been executed based on the notification stored in the memory device after the executing means has executed the step, the premise step being defined as a step which should be executed before the executing means executes a step next to the executed step; and
stopping means for stopping the execution of the next step by the executing means until the determining means determines that the premise step has been executed.

14. A managing unit incorporated in a calculation apparatus comprising a plurality of processing units that processes a plurality of predetermined calculation processes each composed of steps, respectively, and a memory device to which the plurality of processing units and the managing unit are accessible, wherein one or more steps in each calculation process are assigned, as assigned steps, to each of the processing units, the managing unit managing execution of the steps at each of the processing units,
wherein the managing unit comprises
allowance storing means for storing, into a further memory region of the memory device, in sequence, information showing that the execution of each of the steps of each calculation process is allowed, the further memory region corresponding to the managing unit;
first execution determining means for determining whether or not the premise step premised by a step next to the step based on the information stored by the allowance storing means has been executed on the basis of the notification in the memory device; and
means for making the allowance storing means store information showing the execution of a step next to the execution-allowed step, in cases where the first execution determining means determines that the premise step has been executed, after the storage of the information showing the allowance,
wherein the determining means of each of the processing units is adapted to determine the premise step has been executed by recognizing that the information showing the allowance of the execution of a step after the step executed by the executing means is stored in the memory device.

15. A program which is stored in a memory and readable by a computer provided in each of a plurality of processing units of a calculation apparatus so as to be implemented into the computer,
wherein the plurality of processing units that processes a plurality of predetermined calculation processes each composed of steps, respectively, the calculation apparatus comprising a memory device to which the plurality of processing units are accessible, wherein one or more steps in each calculation process are assigned, as assigned steps, to each of the processing units
wherein the implemented program activates the computer so as to enable each of the processing units to realize functions of:
executing means for executing in sequence the assigned steps assigned to the processing unit;
notification storing means for storing into a memory region of the memory device a notification showing that the executing means has executed each step, the memory region being made to correspond to the processing unit;
determining means for determining whether or not a premise step has been executed based on the notification stored in the memory device after the executing means has executed the step, the premise step being defined as a step which should be executed before the executing means executes a step next to the executed step; and
stopping means for stopping the execution of the next step by the executing means until the determining means determines that the premise step has been executed.

16. A program which is stored in a memory and readable by a computer provided in a managing unit of a calculation apparatus so as to be implemented into the computer,
wherein the managing unit is incorporated in the calculation apparatus comprising a plurality of processing units that process a plurality of predetermined calculation processes each composed of steps, respectively, and a memory device to which the plurality of processing units and the managing unit are accessible, wherein one or more steps in each calculation process are assigned, as assigned steps, to each of the processing units, the managing unit managing execution of the steps at each of the processing units,
wherein the implemented program activates the computer so as to enable the managing unit to realize functions of:
allowance storing means for storing, into a further memory region of the memory device, in sequence, information showing that the execution of each of the steps of each calculation process is allowed, the further memory region corresponding to the managing unit;
first execution determining means for determining whether or not the premise step premised by a step next to the step based on the information stored by the allowance storing means has been executed on the basis of the notification in the memory device; and
means for making the allowance storing means store information showing the execution of a step next to the execution-allowed step, in cases where the first execution determining means determines that the premise step has been executed, after the storage of the information showing the allowance,
wherein the determining means of each of the processing units is adapted to determine the premise step has been executed by recognizing that the information showing the allowance of the exertion of a step after the step executed by the executing means is stored in the memory device.
